# EUROPEAN PATENT APPLICATION

(11) **EP 0 873 920 A2**
(43) Date of publication of application: **28.10.1998**
(21) Application number: 98890120.3
(22) Date of filing: 23.04.1998
(51) Int. Cl.: B60R 25/00

(54) **Communications system**

(30) Priority: 23.04.1997 US 842374
(71) Applicant: Code Alarm, Inc., Madison Heights, Michigan (US)
(72) Inventor: Stouffer, Peter J., Davisburg, Michigan 48350 (US)
(74) Representative: Matschnig, Franz, Dipl.-Ing.

(57) **Abstract**

A communications system 40 including a transmitter 42 and receiver 44 which is adapted to function with an overall reduced power requirement.

## Description

### BACKGROUND OF THE INVENTION

### 1. Field of the Invention

This invention relates to a communications system and, more particularly, to communications system having improved electrical power consumption properties and which, in one embodiment, includes a hand-held transmitter which is adapted to generate signals to a vehicle security receiver which is mounted within the vehicle and which thereafter controls one or more security system apparatuses or devices according to a stored program.

### 2. Discussion

Many types of communications systems exist and are effective to transmit information which may be used to control various peripheral devices. Typically, these communication systems include one or more transmitters which are adapted to selectively generate a signal to one or more receivers. Generally, these receivers are adapted to obtain or receive the generated signal, to demodulate or process the signal, and to thereafter produce data which is used by a microprocessor or other processing device, normally operating under stored program control, to control various devices and perform various operations. While many of these prior systems allow such signals to be selectively generated and received , they suffer from various drawbacks.

One of the major drawbacks associated with these prior communication systems is that each of the receivers and the transmitters are "active" and require electrical power to operate. Specifically, such electrical power is used to activate the various electronic components constituting and/or resident within these devices. Typically these transmitters and receivers are respectively powered by separate electrical power sources. Moreover, normally, the transmitter, especially in those used in vehicle security communication systems, includes an "on-board" and replaceable electric battery which must be removed and replaced periodically after it loses its power. Moreover, these receivers, especially in vehicle security systems, are adapted to receive electrical power directly from the battery of the automobile. It is very desirable to reduce the amount of operational electrical power required by the transmitters and receivers. That is one disadvantage associated with these prior vehicle security systems (and communications systems generally) is that the receivers require a relatively large amount of electrical power and that, if the vehicle is parked for a relatively short amount of time, the receivers' power consumption may drain the battery. Additionally, the power requirements of the transmitter require a user to "change" the transmitter battery very often, thereby increasing overall system operating cost and providing an undesirable operating feature.

There is therefore a need to provide a communications system, especially, but not limited to, a communication system used within and/or as part of a vehicle security system, which overcomes many of the drawbacks of the prior art and particularly which allows or causes the transmitters and receivers to judiciously and efficiently use electrical power. Moreover, there is a further need to provide a receiver which is energized only for pre-selected periods of time and a transmitter which is further only energized during the same pre-selected periods of time, thereby reducing the overall power consumption requirements of these devices. As seen below, such a communication system, which overcomes the various drawbacks of the prior art, is provided by Applicant. Moreover, while the following discussion centers upon the use of such a communications system within and/or as part of a vehicle security system, nothing should so limit its application or applicability to other types of functions or systems.

### SUMMARY OF THE INVENTION

It is therefore a primary object of this invention to provide a communication system which overcomes many of the drawbacks of the prior art.

It is another object of this invention to provide a communication system which overcomes many of the disadvantages and/or drawbacks of the prior art and which includes a transmitter and a receiver which consume relatively less power than those of previous communications systems.

It is yet another object of the invention to provide a communications system which overcomes many of the disadvantages and drawbacks of the prior art and which includes a transmitter and a receiver which are respectively activated at pre-selected intervals of time.

It a further object of this invention to provide a communication system which overcomes many of the drawbacks of the prior art, which provides and/or comprises a transmitter and receiver which are each selectively activated or "powered" only during pre-selected periods of time, and further which includes respective oscillators which are co-synchronized and which are adapted to control or select these pre-selected periods or intervals of time.

It is yet another object of this invention to provide a communication system which may be used by a vehicle security system,. and which includes a transmitter and receiver which are selectively energized only for pre-selected intervals of time, thereby reducing the electrical power consumed by the transmitter and the receiver.

According to one aspect of the present invention a communications system is provided. The communications system includes a transmitter adapted to selectively generate a signal and having a first oscillator which causes said signal to be generated at pre-selected intervals of time; and a receiver adapted to receive said selectively generated signal and having a second oscillator which causes said receiver to receive said selectively generated signal only at said pre-selected intervals of time.

According to a second aspect of the present invention a method to reduce the power consumption of a communications system is provided. The method includes the steps of connecting a transmitter to a first source of electrical power for only pre-selected intervals of time and connecting the receiver to a second source of electrical power for second pre-selected intervals of time.

Further objects, features, and advantages will become apparent from a consideration of the following description and claims, when taken in conjunction with the accompanying drawings.

### BRIEF DESCRIPTION OF THE DRAWINGS

Various advantages of the present invention will become apparent to those skilled in the art by reading the following specification and by reference to the following drawings in which:
Figure 1 is a block diagram of a communication system made in accordance with the prior art; and
Figure 2 is a block diagram of a communication system made in accordance with the teachings of the of the preferred embodiment of this invention; and
Figure 3 is a signal chart.

### DETAILED DESCRIPTION OF THE INVENTION

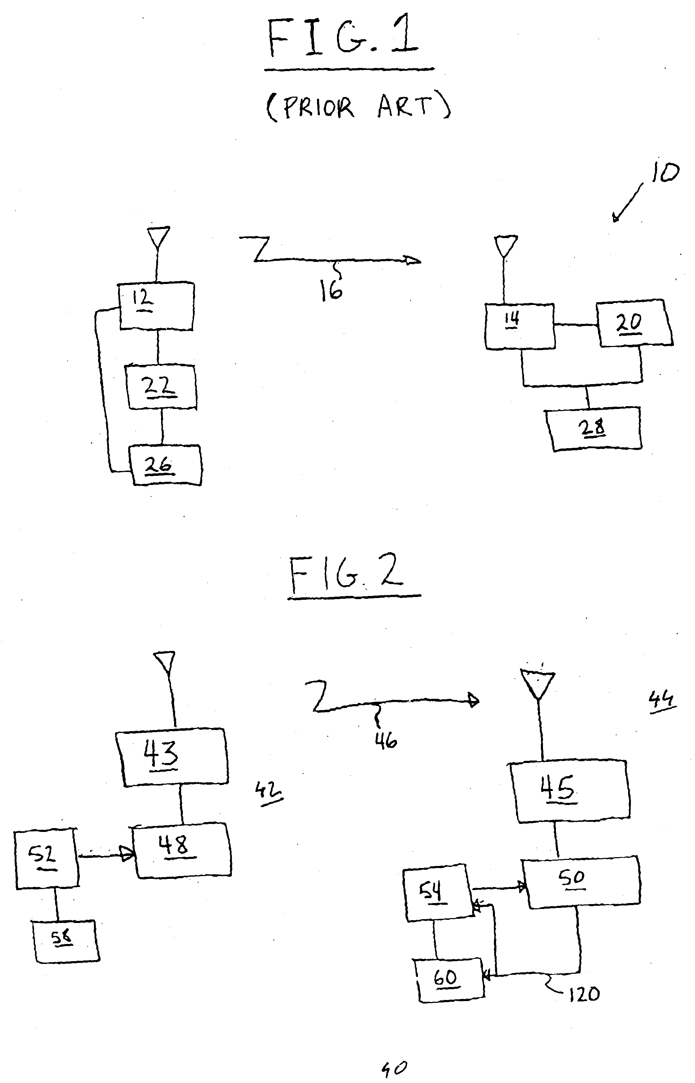

Referring now to Figure 1, there is shown a communication system 10 made in accordance with the teachings of the prior art. Specifically, communications system 10 includes a transmitter 12 which is communicatively coupled to a receiver 14. In the prior art communications system 10 shown with respect to Figure 1, transmitter 12 is a radio frequency type transmitter which is adapted to generate a radio frequency signal 16. This signal 16 is received by receiver 14 and is thereafter decoded and coupled to a processor 20, operating under stored program control, and which is adapted to perform various operations or functions in accordance with the received signal and its stored program.

Further, transmitter 12 of system 10 includes a microprocessor 22 which is physically and electrically coupled to transmitter 12. Moreover, as further shown in Figure 1, microprocessor 22 and transmitter 12 are coupled to a source of electrical power 26 and microprocessor 20 and receiver 14 are further each coupled to a source of electrical power 28.

In this manner, as should be apparent to one of ordinary skill in the art, both respective microprocessors 22, 20 of the transmitter 12 and receiver 14 are provided with electrical power at all times. While this constant source of electrical power to the transmitter 12 and receiver 14 assembly of system 10 allows these units to function at all times, as earlier stated (i.e. receiver 14 is always activated and "waiting" for a signal 16), this constant power drain is undesirable since the power source associated with transmitter 12 must be changed over relatively short intervals of time. Moreover, should receiver 12 be placed within a vehicle (i.e. power source 28 corresponds to a vehicle battery) the constant power requirements of processor 20 causes the vehicle battery to be drained in a relatively quick manner. Hence, prior art communications system 10 has a very significant drawback in that relatively large amounts of electrical power are required by the transmitter 12 and receiver 14 of the system.

Referring now to Figure 2, there is shown a communication system made in accordance with the teachings of the preferred embodiment of this invention and adapted to overcome the various drawbacks of the prior art. As shown, communication system 40 includes a transmitter 42 and a receiver 44. In the embodiment shown in Figure 2, transmitter 42 is a hand-held and radio frequency type transmitter which is adapted to selectively generate a radio frequency signal 46.to receiver 44. Moreover, transmitter 42 includes a signal generator or modulator 43 and a microprocessor 48 operating under stored program control. Receiver 44 includes a demodulator portion 45 which is adapted to demodulate signal 46 and to couple the demodulated signal to microprocessor 50, operating under stored program control. Both microprocessor 48 and microprocessor 50 are respectively and physically coupled to oscillators 52 and 54 which are co-synchronized, meaning that these oscillators 52 and 54 are synchronized according to substantially similar clocks or timing periods. Oscillators 52 and 54 are further respectively coupled to electrical power sources 58 and 60 and are adapted to connect these respective sources 58 and 60 to the microprocessors 48 and 50 only during certain pre-selected intervals of time corresponding to certain periods or intervals of synchronization. In this manner, microprocessors 48 and 50 are "powered" or electrically activated at substantially similar pre-selected intervals of time.

It should be apparent to one of ordinary skill in the art, that oscillators 52 and 54, because they are co-synchronized, allow or cause electrical power to be applied to transmitter 42 and receiver 44 only at pre-selected periods of time. In this manner, the power requirements associated with transmitter 42 and receiver 44 are substantially reduced from that system 10 shown in Figure 1 and found in the prior art. Moreover, since oscillators 52 and 54 are co-synchronized, the power which is applied to transmitters 42 and receiver 44 are applied at substantially equivalent intervals of time. Therefore, receiver 44 and transmitter 42 are each "waken up" at substantially the same instant of time, thereby allowing these components 42 and 44 to be devoid of electrical power at substantially the same intervals of time. In this manner, Applicant has found that a user of such a communication system is unaware of the fact that the transmitter 42 and receiver 44 are non-functional or non-powered" during significant portions of time and further that the communication system 40 allows for substantial electrical power savings over that of the prior art. Moreover, it should further be apparent to one of ordinary skill in the art that this technique may also be applied to virtually any type of communication system and is not limited to vehicle security type systems.

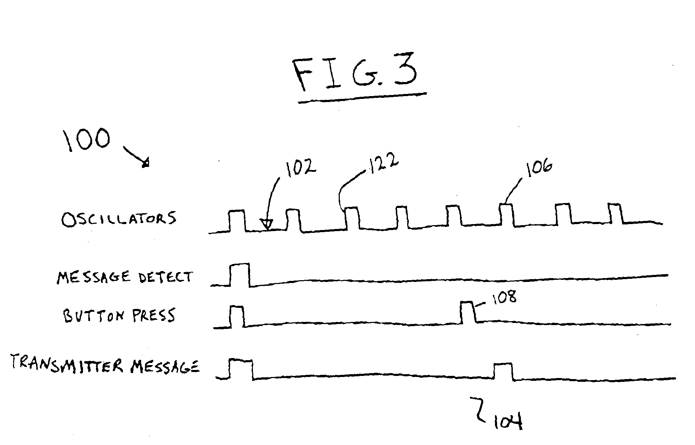

The effect of this co-synchronization is graphically shown in timing chart 100 which comprises Figure 3. Specifically, as shown in chart 100, each oscillator 52, 54 produces substantially similar timing signals 102. A press of the button will not result in an immediate generation of a transmitter signal. Rather, the oscillator 52 will cause the signal 104 to be generated at the next timing signal 106 after the "button pressed" signal 108. Hence, in the transmitter 42, oscillator 52 acts as a gate controlling the time in which the signal 104 is actually sent to the receiver 44. Since the receiver knows exactly when the signal is supposed to arrive, it only has to "look" or become activated during a very small window of time. This allows the "on time" electrical power duty cycle of the receiver 44 to be relatively small and results in a relatively low current drift, in yet another embodiment of the invention, receiver 44 receives a message signal 104. That is, microprocessor 50 determines the time at which signal 104 was received and controls oscillator 60 by means of signal 120 in a manner in which the rising edge 122 of the oscillator pulse begins at this received instant of time. In this manner, the receiver and transmitter substantially remain in synchronization.

In yet another embodiment of this invention, if a user causes the transmitter to generate a series of signals (holding the button down for a long period of time), the microprocessor will bypass the synchronization mode and cause transmission of continuous signals. The receiver 44, during its next "wake-up" period, would then see at least one of the continuous signals and re-synchronize oscillator 54 in the manner earlier described. In this manner, if the two oscillators 52 and 54 were very far out of synchronization, this "catastrophic" re-synchronization could occur.

More than one transmitter is utilized within the system, each transmitter must have a separate oscillator. The receiver may have only a single oscillator 54, under the control of microprocessor 50. In this manner, microprocessor 50 may time division multiplex or assign the oscillator pulses to various transmitters. That is, for example and without limitation, every third pulse. of the oscillator signals "belongs to" transmitter 3. Only during this "every third pulse" time frame may the receiver actually acknowledge and act upon a message received from transmitter 3. This may be easily done, for example and without limitation, by making the time period of each transmitter oscillation signals to be of different lengths. In yet another embodiment of the invention, microprocessor 50 may be adapted to "drop out" from the system (not respond to) any transmitter that has not communicated a signal to receiver 44 during a specific time frame. When that "dropped out" transmitter becomes reactivated, the respective oscillators are "re-synchronized."

It is to be understood that the invention is not limited to the exact construction or method illustrated and described above, but that various changes and modifications may be made without departing from the spirit and scope of the invention, as defined in the following claims. Moreover, if should be apparent that what has been disclosed is a power reduction concept which may have wide applicability across many types of communications systems, especially but not limited to, vehicle security systems.

## Claims

1. A communications system comprising:
a transmitter adapted to selectively generate a signal and having a first oscillator which causes said signal to be generated at pre-selected intervals of time; and
a receiver adapted to receive said selectively generated signal and having a second oscillator which causes said receiver to receive said selectively generated signal only at said pre-selected intervals of time.

2. The communications apparatus of claim 1 wherein said transmitter comprises a hand-held transmitter.

3. The communications apparatus of claim 1 wherein said signal comprises a radio frequency signal.

4. The communications apparatus of claim 3 wherein said receiver comprises a demodulator which is adapted to demodulate said radio frequency signal and to generate a second signal therefrom.

5. The communications apparatus of claim 4 wherein said receiver comprises a processor, coupled to said demodulator and adapted to receive said second signal and to perform on of a plurality of operations in accordance with said received second signal.

6. A method to reduce power consumption by a communications system having a transmitter and a receiver which draw electrical power, said method including the steps of:
connecting said transmitter to a first source of electrical power for only pre-selected intervals of time; and
connecting said receiver to a second source of electrical power for said second pre-selected intervals of time.

7. The method of claim 6 wherein said first and said second pre-selected intervals of time are substantially identical.
